# FASCICULE DE BREVET EUROPEEN

(11) **EP 2 964 692 B1**
(45) Date de publication et mention de la délivrance du brevet: **05.12.2018**
(21) Numéro de dépôt: 14715044.5
(22) Date de dépôt: 07.03.2014
(51) Int. Cl.: C08J 5/24, C08L 33/12, D06M 15/263, C03C 25/28

(54) **SIROP (METH) ACRYLIQUE LIQUIDE D'IMPREGNATION D'UN SUBSTRAT FIBREUX ET SON PROCEDE DE FABRICATION, PROCEDE D'IMPREGNATION D'UN SUBSTRAT FIBREUX, MATERIAU COMPOSITE OBTENU APRES POLYMERISATION DUDIT SUBSTRAT PRE-IMPREGNE**
FLÜSSIGER (METH)ACRYLSIRUP ZUM IMPRÄGNIEREN EINES FASERSUBSTRATS UND VERFAHREN ZUR HERSTELLUNG DAVON, VERFAHREN ZUM IMPRÄGNIEREN EINES FASERSUBSTRATS UND NACH DER POLYMERISATION DIESES VORIMPRÄGNIERTEN SUBSTRATS HERGESTELLTER VERBUNDWERKSTOFF
LIQUID (METH)ACRYLIC SYRUP FOR IMPREGNATING A FIBROUS SUBSTRATE AND METHOD FOR THE PRODUCTION THEREOF, METHOD FOR IMPREGNATING A FIBROUS SUBSTRATE, AND COMPOSITE MATERIAL PRODUCED AFTER POLYMERISATION OF SAID PRE-IMPREGNATED SUBSTRATE

(30) Priorité: 08.03.2013 FR 1352077
(43) Date de publication de la demande: 13.01.2016
(73) Titulaire: Arkema France, 92700 Colombes (FR)
(72) Inventeur: GERARD, Pierre, F-64230 Denguin (FR)
(86) Numéro de dépôt international: PCT/FR2014/050531
(87) Numéro de publication internationale: WO 2014/135815

(56) Documents cités:
- EP-A2- 0 019 372
- WO-A1-2012/085487

## Description

### [Domaine de l'invention]

La présente invention concerne un sirop (méth)acrylique liquide d'imprégnation d'un substrat fibreux.

Plus particulièrement, l'invention concerne un sirop (méth)acrylique liquide visqueux contenant principalement des composants méthacryliques ou acryliques et un additif modifiant choc destiné à renforcer la résistance aux impacts d'une matrice thermoplastique obtenue après polymérisation du sirop. L'invention concerne également un procédé de fabrication d'un tel sirop. L'invention concerne en outre un procédé d'imprégnation d'un substrat fibreux ou de fibres longues avec ledit sirop liquide visqueux. L'invention concerne également un substrat fibreux pré-imprégné avec ledit sirop qui est utile pour la fabrication de pièces composites.

La présente invention concerne également un procédé de fabrication de pièces composites et des pièces composites obtenues par ce procédé.

### [Art Antérieur]

Les pièces mécaniques qui doivent tenir des contraintes élevées pendant leur utilisation, sont largement fabriquées à partir de matériaux composites. Un matériau composite est une combinaison macroscopique de deux matériaux non miscibles ou plus. Le matériau composite est constitué par au moins un matériau qui forme la matrice, c'est-à-dire une phase continue assurant la cohésion de la structure, et un matériau de renfort.

L'objectif, lors de l'utilisation d'un matériau composite, est d'obtenir des performances qui ne sont pas disponibles avec chacun de ses constituants lorsqu'ils sont utilisés séparément. Par conséquent, des matériaux composites sont largement utilisés dans plusieurs secteurs industriels tels que par exemple la construction, l'automobile, l'aérospatial, les transports, les loisirs, l'électronique et le sport, notamment en raison de leurs meilleures performances mécaniques (résistance à la traction supérieure, module de traction supérieur, ténacité à la rupture supérieure) et de leur faible densité, en comparaison des matériaux homogènes.

La classe la plus importante, au regard du volume à l'échelle industrielle commerciale, est celle des composites à matrices organiques, dans lesquels le matériau de matrice est généralement un polymère. La matrice d'un matériau composite polymère est soit un polymère thermoplastique, soit un polymère thermodurcissable.

Les polymères thermodurcissables consistent en des structures tridimensionnelles réticulées. La réticulation est obtenue par cuisson de groupes réactifs dans un pré-polymère. La cuisson peut par exemple être obtenue par chauffage des chaînes polymères afin de réticuler et de durcir le matériau de manière permanente. Afin de préparer le matériau composite polymère, le pré-polymère est mélangé avec l'autre composant, tel que des billes ou fibres de verre, ou l'autre composant est mouillé ou imprégné et cuit ultérieurement. Des exemples de prépolymères ou de matériau de matrice pour polymères thermodurcissables sont les polyesters insaturés, les esters de vinyle, les matériaux époxy ou phénoliques.

Un inconvénient majeur d'une matrice polymère thermodurcissable est sa réticulation. La matrice ne peut pas facilement être façonnée en d'autres formes. Une fois le polymère réticulé, la forme est fixée. Ceci rend également difficile le recyclage du matériau composite thermodurcissable et des pièces ou articles mécaniques ou structurés fabriqués, comprenant ledit matériau composite thermodurcissable, sont brûlés dans une cimenterie ou jetés dans une décharge. Un autre inconvénient majeur de l'ensemble des matrices thermodurcissables est leur fragilité.

Pour permettre le thermoformage et le recyclage, on préfère utiliser les polymères thermoplastiques.

Les polymères thermoplastiques consistent en des polymères linéaires ou ramifiés qui ne sont pas réticulés. Les polymères thermoplastiques sont chauffés afin de mélanger les constituants nécessaires pour la fabrication du matériau composite et sont refroidis pour figer la forme finale. Le problème de ces polymères thermoplastiques fondus est leur viscosité très importante. Afin de préparer un matériau composite polymère à base de polymère thermoplastique, une résine polymère thermoplastique, communément appelée « sirop », est utilisée pour imprégner le matériau de renfort, par exemple un substrat fibreux. Une fois polymérisé, le sirop polymère thermoplastique constitue la matrice du matériau composite. Au moment de l'imprégnation, la viscosité du sirop d'imprégnation doit être maitrisée et adaptée pour ne pas être trop fluide ou trop visqueuse, de manière à imprégner correctement chaque fibre du substrat fibreux. Lorsque le mouillage est partiel, selon que le sirop est trop fluide ou trop visqueux, il apparait respectivement des zones « à nu », c'est-à-dire non imprégnées, et des zones où il se forme des gouttes de polymère sur les fibres qui sont à l'origine de la création de bulles. Ces zones « à nu » et ces bulles engendrent l'apparition de défauts dans le matériau composite final qui sont à l'origine, entre autre, d'une perte de résistance mécanique du matériau composite final. Un sirop répondant à ce problème a été mis au point par la Demanderesse et est décrit dans les demandes de brevet non encore publiées FR N° FR1159553, ou son extension PCT WO2013/056845 et dans la demande de brevet N° FR1256929 ou son extension PCT WO2014/013028.

Les polymères thermoplastiques, notamment les thermoplastiques amorphes tels que le PMMA (polyméthacrylate de méthyle), le PS (polystyrène) par exemple, utilisés pour la réalisation de matériaux composites restent cependant très fragiles et ne présentent pas de bonnes propriétés mécaniques, telles que la résistance aux chocs par exemple. Même si le substrat fibreux permet de renforcer les propriétés mécaniques du matériau en absorbant l'énergie due au choc, la matrice à base de polymère thermoplastique étant fragile, elle ne permet pas d'éviter la propagation de fissures par exemple, si bien que le matériau composite final reste encore trop fragile.

Pour améliorer la résistance mécanique d'un polymère thermoplastique, il est connu de rajouter, dans le polymère à l'état fondu, un additif choc, modificateur de la résistance aux impacts, qui comporte une phase élastomère. Un tel additif se présente sous forme de fines particules discrètes sphériques multicouches. Cet additif est encore appelé coeur-écorce car il présente un coeur élastomère, en général majoritairement acrylique, et au moins une enveloppe thermoplastique. Les particules sont préparées par polymérisation en émulsion et récupérées sous forme de poudre par atomisation. Elles comprennent généralement une succession de couches « dures » et « molles ». On peut ainsi trouver des particules bicouches (mou-dur) ou tricouches (dur-mou-dur). Dans le cas spécifique du PMMA, la taille des particules est en général inférieure à 1 µm et plus particulièrement comprise entre 100nm et 500 nm.

Cette solution appliquée à la fabrication de matériaux composites comprenant une matrice thermoplastique et un substrat fibreux, n'est cependant pas susceptible de transposition industrielle. En effet, le fait de disperser ces particules discrètes faiblement réticulées dans le sirop d'imprégnation pour imprégner le renfort fibreux pose des problèmes lors de l'étape d'imprégnation. Il a en effet été constaté qu'au-delà d'un certain taux de particules dans le sirop, de l'ordre de 15% en poids, celles-ci gonflent et entrainent une gélification du sirop. La viscosité est alors trop forte et il n'est plus possible d'imprégner le substrat fibreux sans constater l'apparition de défauts. Pour éviter ce phénomène de gélification, il faut limiter le taux de ces particules dans la résine, à un taux inférieur à 15% en poids. Cependant, un tel taux reste trop faible et n'apporte pas les propriétés mécaniques attendues, notamment en ce qui concerne la résistance aux chocs et à l'abrasion.

Le document EP 0019372 décrit un sirop d'imprégnation pour substrats fibreux comprenant un polymère élastomère. Le polymère élastomère est sous forme des particules dans le sirop. EP0019372 divulgue un sirop d'imprégnation pour substrats fibreux comprenant un polymère et un élastomère. WO2012/085487 divulgue des compositions sur base de poly- méthacrylate de méthyle contenant des domaines élastomères à caractère souple ayant un température de transition vitreuse inférieure à 0°C

### [PROBLEME TECHNIQUE]

L'invention a donc pour but de remédier à au moins un des inconvénients de l'art antérieur. L'invention vise notamment à proposer une pièce en matériau composite thermoplastique présentant des propriétés mécaniques améliorée, avec notamment une matrice thermoplastique possédant une rigidité supérieure à 2 GPa, une résilience supérieure à 50 kJ/m² et une résistance à la fissuration supérieure à 1,5 MPa.m^{1/2}.

L'invention vise en outre à mouiller complètement, correctement et de manière homogène le substrat fibreux pendant l'imprégnation. Tout défaut du mouillage des fibres, par la création de bulles et de vides par exemple, diminue les performances mécaniques de la pièce finale en matériau composite.

Un autre objectif de la présente invention est de proposer un procédé qui peut être réalisé à faible coût et qui permet une fabrication à l'échelle industrielle, pour produire les pièces mécaniques ou éléments structurés en matériau composite thermoplastique. Par ailleurs, le procédé doit être facile et simple à mettre en oeuvre en utilisant des composés disponibles dans le commerce. La fabrication de pièces doit également être reproductible et rapide, ce qui signifie des temps de cycle courts.

### [BREVE DESCRIPTION DE L'INVENTION]

De manière surprenante, la demanderesse a découvert qu'un sirop (méth)acrylique liquide d'imprégnation d'un substrat fibreux, ledit substrat fibreux étant constitué de fibres longues, ledit sirop d'imprégnation étant caractérisé en ce qu'il comprend :
a) un polymère (méth)acrylique,
b) un monomère (méth)acrylique,
c) des domaines élastomères constitués par des séquences macromoléculaires à caractère souple, de température de transition vitreuse inférieure à 0°C, les séquences macromoléculaires ne sont pas préparées à partir d'un diène,
et qui sont solubles dans le monomère (méthacrylique), ledit sirop (méth)acrylique liquide ayant une viscosité dynamique comprise entre 10 mPa*s et 10 000 mPa*s, de préférence entre 50 mPa*s et 5 000 mPa*s et avantageusement entre 100 mPa*s et 1 000 mPa*s, fournit une imprégnation complète et correcte du substrat fibreux et une très bonne résistance mécanique, notamment aux chocs, après polymérisation.

De manière surprenante, la demanderesse a également découvert qu'un procédé d'imprégnation pour l'imprégnation d'un substrat fibreux, ledit substrat fibreux étant constitué de fibres longues et ledit procédé comprenant une étape d'imprégnation dudit substrat fibreux avec ledit sirop (meth)acrylique liquide d'imprégnation, fournit une imprégnation complète et correcte du substrat fibreux.

Etonnamment, il a en outre été découvert qu'un procédé de fabrication d'un tel sirop (méth)acrylique liquide d'imprégnation, comprenant les étapes suivantes :
1. préparer des séquences macromoléculaires en mélangeant au(x) monomère(s), destiné(s) à former les séquences macromoléculaires, une alcoxyamine de formule générale Z(-T)ₙ dans laquelle Z désigne un groupement multivalent, T un nitroxyde et n est un entier supérieur ou égal à 2
2.mélanger les séquences macromoléculaires obtenues à l'étape 1 à un polymère (méth)acrylique et à un monomère (méth)acrylique,
permet d'améliorer de manière significative les propriétés mécaniques de la matrice thermoplastique obtenue après polymérisation du sirop.

Étonnamment, il a en outre été découvert qu'un procédé de fabrication de pièces composites comprenant les étapes suivantes :
a) l'imprégnation d'un substrat fibreux avec un tel sirop (méth)acrylique liquide,
b) la polymérisation du sirop (méth)acrylique liquide imprégnant ledit substrat fibreux,
permet d'obtenir des pièces mécaniques ou éléments structurels présentant des propriétés mécaniques significativement améliorées. Ces pièces contiennent une matrice thermoplastique possédant une rigidité supérieur à 2 GPa, une résilience supérieure à 50 kJ/m² et une résistance à la fissuration supérieure à 1,5 MPa.m^{1/2}

Par ailleurs, il a également été découvert qu'une pièce composite obtenue par le procédé de fabrication, à partir de la matrice thermoplastique renforcée des domaines élastomères constitués par des séquences macromoléculaires à caractère souple, de température de transition vitreuse inférieure à 0°C, et qui sont solubles dans le monomère (méthacrylique) ne contient presque pas de défauts tels que des vides entre le substrat fibreux et le polymère (méth)acrylique.

### [DESCRIPTION DETAILLEE]

Selon un premier aspect, la présente invention concerne un sirop (méth)acrylique liquide d'imprégnation d'un substrat fibreux, ledit substrat fibreux étant constitué de fibres longues, ledit sirop étant caractérisé en ce qu'il comprend :
a)un polymère (méth)acrylique,
b)un monomère (méth)acrylique,
c) des domaines élastomères constitués par des séquences macromoléculaires à caractère souple, de température de transition vitreuse inférieure à 0°C, les séquences macromoléculaires ne sont pas préparées à partir d'un diène,
et qui sont solubles dans le monomère (méthacrylique), ledit sirop (méth)acrylique liquide ayant une viscosité dynamique comprise entre 10 mPa*s et 10 000 mPa*s, de préférence entre 50 mPa*s et 5 000 mPa*s et avantageusement entre 100 mPa*s et 1 000 mPa*s.

Selon un autre aspect, la teneur en séquences macromoléculaires dans le sirop est comprise 1 et 40% en poids, de préférence entre 3 et 25% en poids et avantageusement entre 5 et 15 % en poids.

Le terme « substrat fibreux » tel qu'utilisé se rapporte à des tissus, des feutres ou des non-tissés qui peuvent être sous la forme de bandes, de nappes, de tresses, de mèches ou de pièces.

Le terme « (méth)acrylique » tel qu'utilisé se rapporte à tout type de monomères acryliques et méthacryliques.

Le terme « PMMA » tel qu'utilisé se rapporte aux homo- et copolymères de méthacrylate de méthyle (MMA), le rapport en poids de MMA dans le PMMA étant d'au moins 70 % en poids pour le copolymère de MMA.

Le terme « monomère » tel qu'utilisé se rapporte à une molécule qui peut subir une polymérisation.

Le terme « polymérisation » tel qu'utilisé se rapporte au procédé de transformation d'un monomère ou d'un mélange de monomères en un polymère.

Le terme « polymère thermoplastique » tel qu'utilisé se rapporte à un polymère qui se transforme en un liquide ou devient plus liquide ou moins visqueux lorsqu'il est chauffé et qui peut prendre de nouvelles formes par l'application de chaleur et de pression.

Le terme « polymère thermodurcissable » tel qu'utilisé se rapporte à un prépolymère à un état souple, solide ou visqueux qui se transforme de manière irréversible en un réseau polymère insoluble et infusible par cuisson.

Le terme « composite polymère » tel qu'utilisé se rapporte à un matériau multicomposant comprenant plusieurs domaines de phase différents, parmi lesquels au moins un type de domaine de phase est une phase continue et dans lequel au moins un composant est un polymère.

Le terme « miscibilité » tel qu'utilisé se rapporte à la capacité de deux composés à se mélanger totalement pour former une phase homogène.

Le terme « solubilité » tel qu'utilisé se rapporte à la capacité d'un solide à se mélanger dans un liquide, appelé solvant, pour former une solution présentant une phase homogène.

Le terme « rigidité » se rapporte à un essai de traction selon la norme ISO527 dans le cas d'un matériau thermoplastique ou thermodurcissable, renforcé ou non par des fibres.

Le terme « résilience » se rapporte à un essai de choc Charpy non entaillé selon la norme ISO 179 dans le cas d'un matériau non renforcé par des fibres.

Le terme « résistance à la fissuration » se rapporte à un essai sur éprouvettes entaillées selon la norme ISO 13586 dans le cas d'un matériau non renforcé par des fibres.

Concernant la pièce composite, il s'agit d'un panneau, d'un couvercle ou d'une coque constitué d'un matériau composite ou de pièces pour avions, pour bateaux (coque et pont), véhicules de chemin de fer (trappe, cloison, caisse) et de pièces automobiles (carrosserie, capot, porte).

**En ce qui concerne le monomère (méth)acrylique,** le monomère est choisi parmi l'acide acrylique, l'acide méthacrylique, les monomères acryliques d'alkyle, les monomères méthacryliques d'alkyle et leurs mélanges.

De préférence, le monomère est choisi parmi l'acide acrylique, l'acide méthacrylique, les monomères acryliques d'alkyle, les monomères méthacryliques d'alkyle et leurs mélanges, le groupe alkyle contenant de 1 à 22 carbones, linéaires, ramifiés ou cycliques ; le groupe alkyle contenant de préférence 1 à 12 carbones, linéaires, ramifiés ou cycliques.

Avantageusement, le monomère (méth)acrylique est choisi parmi le méthacrylate de méthyle, le méthacrylate d'éthyle, l'acrylate de méthyle, l'acrylate d'éthyle, l'acide méthacrylique, l'acide acrylique, l'acrylate de n-butyle, l'acrylate d'isobutyle, le méthacrylate de n-butyle, le méthacrylate d'isobutyle, l'acrylate de cyclohexyle, le méthacrylate de cyclohexyle, l'acrylate d'isobornyle, le méthacrylate d'isobornyle et leurs mélanges.

Plus avantageusement, le monomère (méth)acrylique est choisi parmi le méthacrylate de méthyle, l'acrylate d'isobornyle ou l'acide acrylique et leurs mélanges.

Selon un mode de réalisation préféré, au moins 50 % en poids, de préférence au moins 60 % en poids du monomère est le méthacrylate de méthyle.

Selon un mode de réalisation davantage préféré, au moins 50 % en poids, de préférence au moins 60 % en poids, de manière davantage préférée au moins 70 % en poids et avantageusement au moins 80 % en poids et encore plus avantageusement 90 % en poids du monomère est un mélange de méthacrylate de méthyle avec de l'acrylate d'isobornyle et/ou de l'acide acrylique.

**En ce qui concerne le polymère (méth) acrylique,** on peut mentionner les polyméthacrylates d'alkyle ou les polyacrylates d'alkyle. Selon un mode de réalisation préféré, le polymère (méth)acrylique est le polyméthacrylate de méthyle (PMMA).

Le terme « PMMA » désigne un homopolymère ou copolymère de méthacrylate de méthyle (MMA) ou leurs mélanges.

Selon un mode de réalisation, l'homo- ou le copolymère de méthacrylate de méthyle (MMA) comprend au moins 70 %, de préférence au moins 80 %, avantageusement au moins 90 % et plus avantageusement au moins 95 % en poids de méthacrylate de méthyle.

Selon un autre mode de réalisation, le PMMA est un mélange d'au moins un homopolymère et d'au moins un copolymère de MMA, ou un mélange d'au moins deux homopolymères ou deux copolymères de MMA ayant un poids moléculaire moyen différent, ou un mélange d'au moins deux copolymères de MMA ayant une composition de monomères différente.

Le copolymère de méthacrylate de méthyle (MMA) comprend de 70 % à 99,7 % en poids de méthacrylate de méthyle et de 0,3 à 30 % en poids d'au moins un monomère contenant au moins une insaturation éthylénique qui peut copolymériser avec le méthacrylate de méthyle.

Ces monomères sont bien connus et on peut notamment mentionner les acides acrylique et méthacrylique et les (méth)acrylates d'alkyle dans lesquels le groupe alkyle contient de 1 à 12 atomes de carbone. À titre d'exemple, on peut mentionner l'acrylate de méthyle et le (méth)acrylate d'éthyle, de butyle ou de 2-éthylhexyle. De préférence, le comonomère est un acrylate d'alkyle dans lequel le groupe alkyle contient de 1 à 4 atomes de carbone.

Selon un mode de réalisation préféré, le copolymère de méthacrylate de méthyle (MMA) comprend de 80 % à 99,7 %, avantageusement de 90 % à 99,7 % et plus avantageusement de 90 % à 99,5 % en poids de méthacrylate de méthyle et de 0,3 % à 20 %, avantageusement de 0,3 % à 10 % et plus avantageusement de 0,5 % à 10 % en poids d'au moins un monomère contenant au moins une insaturation éthylénique qui peut copolymériser avec le méthacrylate de méthyle. De préférence, le comonomère est choisi parmi l'acrylate de méthyle ou l'acrylate d'éthyle ou leurs mélanges.

La masse moléculaire moyenne en poids du polymère (méth)acrylique doit être élevée, ce qui signifie supérieure à 50 000 g/mol, de préférence supérieure à 100 000 g/mol.

La masse moléculaire moyenne en poids peut être mesurée par chromatographie d'exclusion stérique (SEC en anglais) ou chromatographie sur gel perméable (GPC en anglais).

Le polymère (méth)acrylique est complètement soluble dans le monomère (méth)acrylique ou dans le mélange de monomères (méth)acryliques. Il permet d'augmenter la viscosité du monomère (méth)acrylique ou du mélange de monomères (méth)acryliques. La solution obtenue est généralement nommée « sirop » ou « pré-polymère ». La valeur de la viscosité dynamique du sirop (méth)acrylique liquide est comprise entre de 10 mPa*s et 10 000 mPa*s, de préférence entre 50 mPa*s et 5 000 mPa*s et avantageusement entre 100 mPa*s et 1 000 mPa*s. La viscosité du sirop peut facilement être mesurée avec un rhéomètre ou un viscosimètre. La viscosité dynamique est mesurée à 25°C. Le sirop (méth)acrylique liquide a un comportement newtonien, ce qui signifie qu'il n'y a pas de dilution sous cisaillement, de sorte que la viscosité dynamique est indépendante du cisaillement dans un rhéomètre ou de la vitesse du mobile dans un viscosimètre. Une telle viscosité du sirop obtenu permet une imprégnation correcte des fibres du substrat fibreux.

Avantageusement, le sirop (méth)acrylique liquide ne contient pas de solvant ajouté volontairement supplémentaire.

**En ce qui concerne les séquences macromoléculaires,** celles-ci présentent une température de transition vitreuse inférieure à 0°C, notée Tg et mesurée par « Calorimétrie différentielle à balayage » (DSC en anglais) selon la norme ISO 11357-2.

De préférence, la séquence macromoléculaire à caractère souple fait partie d'un copolymère à blocs contenant au moins un bloc ayant une température de transition vitreuse inférieure à 0 °C.

Le copolymère à blocs peut être choisi parmi un copolymère à blocs thermoplastique. Avantageusement, le copolymère à blocs est amorphe. Plus avantageusement, le copolymère à blocs ne comprend pas de séquences semi-cristallines ou cristallines.

De manière préférée entre toutes, le copolymère à blocs thermoplastique est un copolymère à blocs acrylique thermoplastique. Ceci signifie qu'au moins 50 % en poids des monomères contenus dans le copolymère à blocs acrylique thermoplastique sont des monomères de (méth)acrylate d'alkyle.

Les copolymères à blocs peuvent être obtenus par polymérisation radicalaire contrôlée (PRC) ou par polymérisation anionique ; le procédé le plus approprié selon le type de copolymère à fabriquer sera choisi.

Il s'agira de préférence de la PRC, notamment en présence de nitroxydes, pour les copolymères à blocs de type (A)ₙB et de la polymérisation anionique ou radicalaire à base de nitroxyde pour les structures de type ABA

De plus, la masse moyenne en nombre des séquences macromoléculaires à caractère souple, de température de transition vitreuse inférieure à 0°C, est supérieure à 10000g/mol, de préférence supérieure à 30000 g/mol, de manière préférée supérieure à 60000 g/mol, et de manière avantageuse supérieure à 120000 g/mol, mais inférieure à 500000g/mol. La polymolécularité est comprise entre 1.5 et 2.5.

Les séquences macromoléculaires sont préparées à partir d'un ou plusieurs monomère(s) choisi(s) parmi :
- les monomères acryliques de formule

   CH₂=CH-C(=O)-O-R₁

   où R₁ désigne un atome d'hydrogène, un groupement alkyle en C₁-C₄₀ linéaire, cyclique ou ramifié éventuellement substitué par un atome d'halogène, un groupement hydroxy, alcoxy, cyano, amino ou époxy tels que par exemple l'acide acrylique, l'acrylate de méthyle, d'éthyle, de propyle, de n-butyle, d'isobutyle, de tertiobutyle, de 2-éthylhexyle, de glycidyle, les acrylates d'hydroxyalkyle, l'acrylonitrile ;
- les monomères méthacryliques de formule

   CH₂=C(CH₃)-C(=O)-O-R₂

   où R₂ désigne un atome d'hydrogène, un groupement alkyle en C₁-C₄₀ linéaire, cyclique ou ramifié éventuellement substitué par un atome d'halogène, un groupement hydroxy, alcoxy, cyano, amino ou époxy tels que par exemple l'acide méthacrylique, le méthacrylate de méthyle, d'éthyle, de propyle, de n-butyle, d'isobutyle, de tertiobutyle, de 2-éthylhexyle, de glycidyle, les méthacrylates d'hydroxyalkyle, le méthacrylonitrile ;
- les monomères vinylaromatiques tels que par exemple le styrène, les styrènes substitués, l'alpha-méthylstyrène, le monochlorostyrène, le tertbutyl styrène

Les séquences macromoléculaires ne sont pas préparées à partir d'un diène. L'homme de l'art sait combiner ces monomères de façon à régler la Tg globale des séquences macromoléculaires. Afin d'obtenir des séquences macromoléculaires de Tg inférieure à 0°C, il est nécessaire d'utiliser au moins un monomère présentant une Tg inférieure à 0°C, par exemple l'acrylate de butyle ou l'acrylate de 2-éthylhexyle.

Les séquences macromoléculaires peuvent être composées uniquement d'un monomère présentant une Tg inférieure à 0C°, par exemple l'acrylate de butyle ou l'acrylate de 2-éthylhexyle. Les séquences macromoléculaires peuvent aussi être composées d'au moins un acrylate d'alkyle et d'un monomère vinylaromatique.

Préférablement les séquences macromoléculaires à caractère souple comprennent d'acrylate de butyle à au mois 70% massique.

Avantageusement, les séquences macromoléculaires sont composées d'acrylate de butyle et de styrène dans le rapport massique acrylate de butyle / styrène compris entre 70/30 et 90/10, de préférence entre 75/25 et 85/15.

Les séquences macromoléculaires sont préparées en mélangeant au(x) monomère(s) destiné(s) à former les séquences macromoléculaires, une alcoxyamine de formule générale Z(-T)ₙ dans laquelle Z désigne un groupement multivalent, T un nitroxyde et n est un entier supérieur ou égal à 2.

**S'agissant de l'alcoxyamine,** celle-ci est décrite par la formule générale Z(-T)ₙ dans laquelle Z désigne un groupement multivalent, T un nitroxyde et n un entier supérieur à 2, de préférence compris entre 2 et 10, avantageusement compris entre 2 et 8.

n représente la fonctionnalité de l'alcoxyamine, c'est-à-dire le nombre de radicaux nitroxydes T libérables par l'alcoxyamine selon le mécanisme : 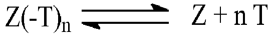 Cette réaction est activée par la température. En présence de monomère(s), l'alcoxyamine activée amorce une polymérisation. Le schéma ci-dessous illustre la préparation d'un copolymère polyM2-polyM1-polyM2 à base d'une alcoxyamine pour laquelle n=2. Le monomère M1 est d'abord polymérisé après activation de l'alcoxyamine, puis une fois le bloc polyM1 terminé, le monomère M2 est ensuite polymérisé : 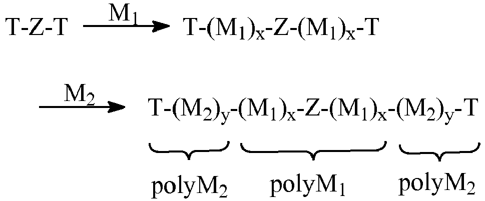 Le principe de la préparation de copolymères à blocs reste valable pour n>2.

Z désigne un groupement multivalent c'est-à-dire un groupement susceptible de libérer après activation plusieurs sites radicalaires. L'activation en question se produit par rupture de liaison covalente Z-T.

A titre d'exemple, Z peut être choisi parmi les groupements (I) à (VIII) suivants : 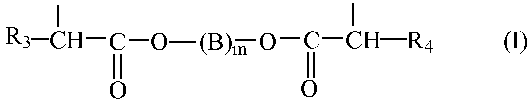 dans laquelle R₃ et R₄ identiques ou différents, représentent un radical alkyle, linéaire ou ramifié ayant un nombre d'atomes de carbone allant de 1 à 10, des radicaux phényle ou thiényle éventuellement substitués par un atome d'halogène tel que F, Cl, Br, ou bien par un radical alkyle, linéaire ou ramifié, ayant un nombre d'atomes de carbone allant de 1 à 4, ou bien encore par des radicaux nitro, alcoxy, aryloxy, carbonyle, carboxy ; un radical benzyle, un radical cycloalkyle ayant un nombre d'atomes de carbone allant de 3 à 12, un radical comportant une ou plusieurs insaturations ; B représente un radical alkylène linéaire ou ramifié, ayant un nombre d'atomes de carbone allant de 1 à 20 ; m est un nombre entier allant de 1 à 10 ; 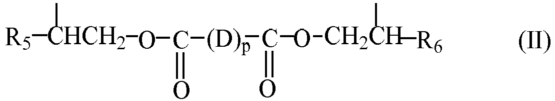 dans laquelle R₅ et R₆, identiques ou différents, représentent des radicaux aryle, pyridyle, furyle, thiényle éventuellement substitués par un atome d'halogène tel que F, Cl, Br, ou bien par un radical alkyle, linéaire ou ramifié, ayant un nombre d'atomes de carbone allant de 1 à 4, ou bien encore par des radicaux nitro, alcoxy, aryloxy, carbonyle, carboxy ; D représente un radical alkylène, linéaire ou ramifié, ayant un nombre d'atomes de carbone allant de 1 à 6, un radical phénylène, un radical cycloalkylène ; p étant un nombre entier allant de 1 à 10 ; 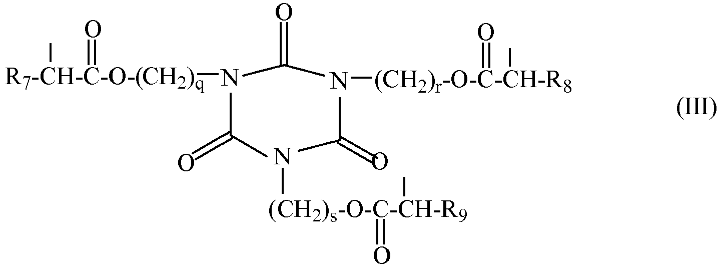 dans laquelle R₇, R₈ et R₉, identiques ou différents, ont les mêmes significations que R₃ et R₄ de la formule (I), q, r et s sont des nombres entiers allant de 1 à 10 ; 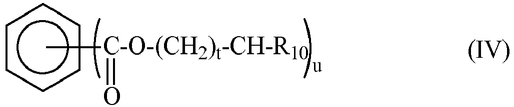 dans laquelle R₁₀ a la même signification que R₅ et R₆ de la formule (II), t est un nombre entier allant de 1 à 4, u est un entier compris entre 2 et 6 (le groupement aromatique est substitué); 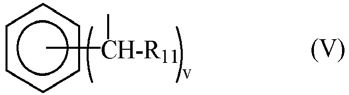 dans laquelle R₁₁ a la même signification que le radical R₁₀ de la formule (IV) et v est un entier compris entre 2 et 6 ; 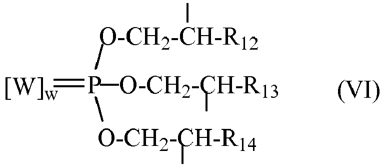 dans laquelle R₁₂, R₁₃ et R₁₄, identiques ou différents, représentent un radical phényle, éventuellement substitué par un atome d'halogène tel que Cl, Br, ou bien par un radical alkyle, linéaire ou ramifié, ayant un nombre d'atomes de carbone allant de 1 à 10 ; W représente un atome d'oxygène, de soufre, de sélénium, w est égal à zéro ou 1 ; 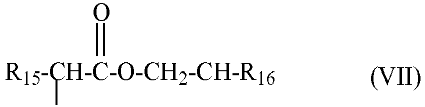 dans laquelle R₁₅ a la même signification que R₃ de la formule (I), R₁₆ a la même signification que R₅ ou R₆ de la formule (II) ; 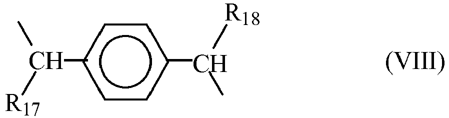 dans laquelle R₁₇ et R₁₈ identiques ou différents représentent un atome d'hydrogène, un radical alkyle, linéaire ou ramifié ayant un nombre d'atomes de carbone allant de 1 à 10, un radical aryle, éventuellement substitué par un atome d'halogène ou un hétéro atome.

T désigne un nitroxyde qui est un radical libre stable présentant un groupement =N-O^{•} c'est-à-dire un groupement sur lequel est présent un électron célibataire. On désigne par radical libre stable un radical tellement persistant et non réactif vis-à-vis de l'air et de l'humidité dans l'air ambiant, qu'il peut être manipulé et conservé pendant une durée bien plus longue que la majorité des radicaux libres (voir à ce propos, Accounts of Chemical Research 1976, 9, 13-19). Le radical libre stable se distingue ainsi des radicaux libres dont la durée de vie est éphémère (de quelques millisecondes à quelques secondes) comme les radicaux libres issus des amorceurs habituels de polymérisation comme les peroxydes, les hydroperoxydes ou les amorceurs azoïques. Les radicaux libres amorceurs de polymérisation tendent à accélérer la polymérisation alors que les radicaux libres stables tendent généralement à la ralentir. On peut dire qu'un radical libre est stable au sens de la présente invention s'il n'est pas amorceur de polymérisation et si, dans les conditions habituelles de l'invention, la durée de vie moyenne du radical est d'au moins une minute.

T est représenté par la structure : 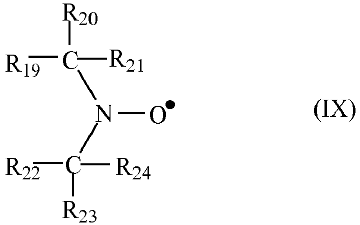 dans laquelle R₁₉, R₂₀, R₂₁, R₂₂, R₂₄ et R₂₄ désignent des groupements :
- alkyles linéaires ou branchés en C₁-C₂₀, de préférence en C₁-C₁₀ tels que méthyle, éthyle, propyle, butyle, isopropyle, isobutyle, tertiobutyle, néopentyle, substitués ou non,
- aryles en C₆-C₃₀ substitués ou non tels que benzyle, aryl(phényl)
- cycliques saturés en C₁-C₃₀
et dans laquelle les groupements R₁₉ et R₂₂ peuvent faire partie d'une structure cyclique R₁₉-CNC-R₂₂ éventuellement substituée pouvant être choisie parmi : 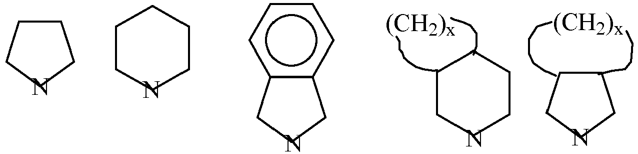 dans lesquelles x désigne un entier compris entre 1 et 12.

A titre d'exemples, on pourra utiliser les nitroxydes suivants :

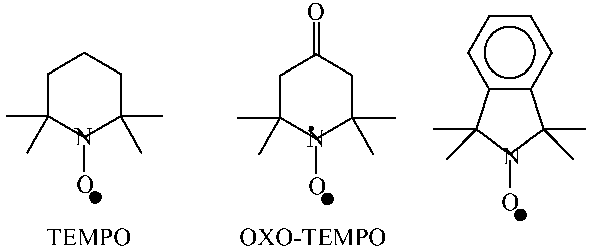

De manière particulièrement préférée, les nitroxydes de formule (X) sont utilisés dans le cadre de l'invention : 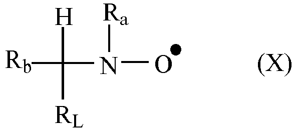
Rₐ et R_{b} désignant des groupements alkyles identiques ou différents possédant de 1 à 40 atomes de carbone, éventuellement reliés entre eux de façon à former un cycle et éventuellement substitués par des groupements hydroxy, alcoxy ou amino,
R_{L} désignant un groupement monovalent de masse molaire supérieur à 16 g/mol, de préférence supérieur à 30 g/mol. Le groupement R_{L} peut par exemple avoir une masse molaire comprise entre 40 et 450 g/mol. Il s'agit de préférence d'un groupement phosphoré de formule générale (XI) : 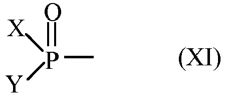 dans laquelle X et Y, pouvant être identiques ou différents, peuvent être choisis parmi les radicaux alkyle, cycloalkyle, alkoxyle, aryloxyle, aryle, aralkyloxyle, perfluoroalkyle, aralkyle et peuvent comprendre de 1 à 20 atomes de carbone ; X et/ou Y peuvent également être un atome d'halogène comme un atome de chlore, de brome ou de fluor.

De manière avantageuse, R_{L} est un groupement phosphonate de formule : 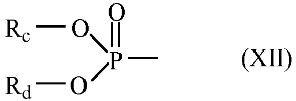 dans lequel R_{c} et R_{d} sont deux groupements alkyles identiques ou différents, éventuellement reliés de manière à former un cycle, comprenant de 1 à 40 atomes de carbone, éventuellement substitués ou non.

Le groupement R_{L} peut également comprendre au moins un cycle aromatique tel que le radical phényle ou le radical naphtyle, substitué par exemple par un ou plusieurs radical(aux) alkyle comprenant de 1 à 10 atomes de carbone.

Les nitroxydes de formule (X) sont préférés car ils permettent d'obtenir un bon contrôle de la polymérisation radicalaire des monomères (méth)acryliques. Les alcoxyamines de formule (XIII) ayant un nitroxyde de formule (X) sont donc préférées : 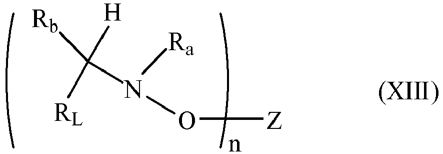 dans laquelle :
Z désigne un groupement multivalent , n est un nombre entier supérieur ou égal à 1;
Rₐ et R_{b} désignent des groupements alkyles identiques ou différents possédant de 1 à 40 atomes de carbone, éventuellement reliés entre eux de façon à former un cycle et éventuellement substitués par des groupements hydroxy, alcoxy ou amino ;
R_{L} désigne un groupement monovalent de masse molaire supérieur à 16 g/mol, de préférence supérieur à 30 g/mol. Le groupement R_{L} peut par exemple avoir une masse molaire comprise entre 40 et 450 g/mol. Il s'agit de préférence d'un groupement phosphoré de formule générale (XIV) : 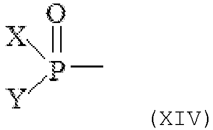 dans laquelle X et Y, pouvant être identiques ou différents, peuvent être choisis parmi les radicaux alkyle, cycloalkyle, alkoxyle, aryloxyle, aryle, aralkyloxyle, perfluoroalkyle, aralkyle et peuvent comprendre de 1 à 20 atomes de carbone ; X et/ou Y peuvent également être un atome d'halogène comme un atome de chlore, de brome ou de fluor.

De manière avantageuse, R_{L} est un groupement phosphonate de formule (XV): 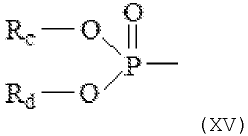 dans lequel R_{c} et R_{d} sont deux groupements alkyles identiques ou différents, éventuellement reliés de manière à former un cycle, comprenant de 1 à 40 atomes de carbone, éventuellement substitués ou non.

Le groupement R_{L} peut également comprendre au moins un cycle aromatique tel que le radical phényle ou le radical naphtyle, substitué par exemple par un ou plusieurs radical(aux) alkyle comprenant de 1 à 10 atomes de carbone.

A titre d'exemple de nitroxyde de formule (X) pouvant être porté par l'alcoxyamine (XIII), on peut citer :
- le N-tertiobutyl-1-phényl-2-méthylpropyl nitroxyde,
- le N-(2-hydroxyméthylpropyl)-1-phényl-2-méthylpropyl nitroxyde,
- le N-tertiobutyl-1-dibenzylphosphono-2,2-diméthyl-propyl nitroxyde
- le N-tertiobutyl-1-di(2,2,2-trifluoroéthyl)phosphono-2,2-diméthylpropyl-nitroxyde,
- le N-tertiobutyl[(1-diéthylphosphono)-2-méthylpropyl]nitroxyde,
- le N-(1-méthyléthyl)-1-cyclohexyl-1-(diéthylphosphono)nitroxyde,
- le N-(1-phénylbenzyl)-[(1-diéthylphosphono)-1-méthyléthyl]nitroxyde,
- le N-phényl-1-diéthylphosphono-2,2-diméthylpropylnitroxyde,
- le N-phényl-1-diéthylphosphono-1-méthyléthylnitroxyde,
- le N-(l-phényl2-méthylpropyl)-1-diéthylphosphonométhyléthylnitroxyde,
- ou encore le nitroxyde de formule :

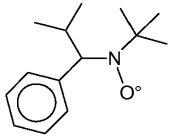

Le nitroxyde de formule (XVI) est particulièrement préféré : 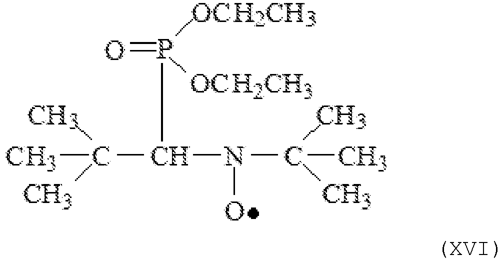 Il s'agit du N-tertiobutyl-1-diéthylphosphono-2,2-diméthylpropyl nitroxyde, couramment appelé SG1 pour simplifier.

L'alcoxyamine (I), et notamment l'alcoxyamine (XIII), peuvent être préparées par des recettes décrites par exemple dans ) US5910549 ou dans FR99.04405**.** Une méthode pouvant être utilisée consiste à réaliser le couplage d'un radical carboné avec un nitroxyde. Le couplage peut être réalisé à partir d'un dérivé halogéné en présence d'un système organométallique comme CuX/ligand (X=Cl ou Br) selon une réaction de type ATRA (Atom Transfer Radical Addition) tel que décrit par D. Greszta et coll. dans Macromolecules 1996, 29, 7661-7670.

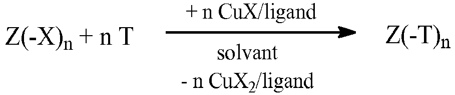

Les alcoxyamines pouvant être utilisées dans le cadre de l'invention sont représentées ci-dessous :
DIAMINS : 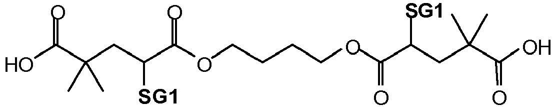 TRIAMINS 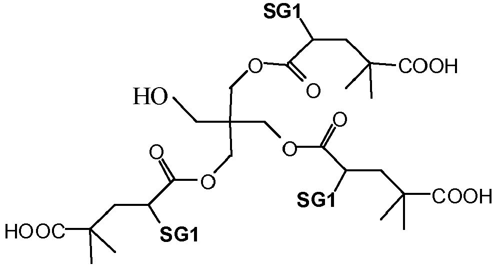 De préférence on utilise la DIAMINS.

On ne sortirait pas du cadre de la présente invention en combinant plusieurs alcoxyamines répondant à la formule (I), en particulier plusieurs alcoxyamines de formule (XIII). Ces mélanges pourraient comprendre ainsi par exemple une alcoxyamine ayant n1 nitroxydes attachés et une alcoxyamine ayant n2 nitroxydes attachés avec n1 différent de n2. Il pourrait s'agir aussi d'une combinaison d'alcoxyamines porteuses de nitroxydes différents.

Afin de conserver une viscosité dynamique du sirop (méth)acrylique comprise entre 10 mPa*s et 10 000 mPa*s, de préférence entre 50 mPa*s et 5 000 mPa*s et avantageusement entre 100 mPa*s et 1 000 mPa*s, de sorte qu'elle permet une bonne imprégnation du substrat fibreux, les différents composés du sirop (méth)acrylique sont incorporés avec des pourcentages massiques suivants :

Le monomère (méth)acrylique ou les monomères (méth)acryliques dans le sirop (méth)acrylique liquide sont présents à hauteur d'au moins 30 % en poids, de préférence d'au moins 40 % en poids, avantageusement d'au moins 50 % en poids et plus avantageusement d'au moins 70 % en poids du sirop (méth)acrylique liquide total.

Le ou les polymères (méth) acryliques dans le sirop (méth)acrylique liquide sont présents à hauteur d'au moins 1 % en poids, de préférence 5 %, avantageusement d'au moins 8 % et plus avantageusement d'au moins 10 % en poids du sirop (méth)acrylique liquide total.

Le ou les polymères (méth) acryliques dans le sirop (méth)acrylique liquide sont présents à hauteur d'au plus 50 % en poids, de préférence d'au plus 40 %, avantageusement d'au plus 35 % et plus avantageusement d'au plus 30 % en poids du sirop (méth)acrylique liquide total.

En particulier, le sirop (méth)acrylique liquide d'imprégnation comprend :
a) de 10% en poids à 30% en poids d'un polymère (méth)acrylique,
b) de 30% en poids à 89% en poids d'un monomère (méth)acrylique,
c) de 1% en poids à 40% en poids de séquences macromoléculaires.

**S'agissant du procédé de fabrication du sirop (méth)acrylique d'imprégnation,** celui-ci comprend les étapes suivantes :
Au cours de la 1^{ère} étape, des séquences macromaléculaires sont préparées en mélangeant l'alcoxyamine Z(-T)ₙ et le(s) monomère(s) destiné(s) à former les séquences macromoléculaires et en chauffant le mélange obtenu à une température suffisante pour activer l'alcoxyamine.

Il est possible de rajouter également au mélange du nitroxyde afin d'assurer un meilleur contrôle de la polymérisation. Le nitroxyde qui est rajouté peut être identique à celui qui est porté sur l'alcoxyamine ou différent. La proportion molaire du nitroxyde ajouté par rapport à l'alcoxyamine est comprise entre 0 et 20%, de préférence entre 0 et 10%.

La conversion peut varier entre 10 et 100%. Cependant, de préférence, la polymérisation est arrêtée pour une conversion comprise entre 50 et 100%, et avantageusement entre 50 et 80%.

Cette étape peut être réalisée dans un réacteur fermé ou dans un réacteur ouvert, par exemple un réacteur de type piston. De préférence, il s'agit d'un réacteur fermé. Les séquences macromoléculaires sont préparées à une température comprise entre 80 et 150°C, de préférence entre 80 et 130°C. Cette température est liée à l'alcoxyamine et au(x) monomère(s) utilisés. La durée de la polymérisation peut varier entre 30 minutes et 8 heures, de préférence entre 1 et 8 heures, avantageusement entre 2 et 6 heures. Il est préférable d'éviter la présence d'oxygène. Pour ce faire, le mélange réactionnel est en général dégazé sous pression réduite et le réacteur inerté à l'aide d'un balayage à l'azote ou à l'argon après introduction des réactifs.

A l'issue de cette 1^{ère} étape, on obtient les séquences macromoléculaires, éventuellement mélangées avec le(s) monomère(s) non consommé(s). Celui (ceux)-ci peuvent être éliminés par distillation sous pression réduite à une température inférieure à 80°C.

Au cours de la 2^{ème} étape, les séquences macromoléculaires obtenues à l'issue de la première étape sont mélangées au monomère (méth)acrylique et au polymère (méth)acrylique, afin d'obtenir le sirop (méth)acrylique d'imprégnation.

Les séquences macromoléculaires sont solubles dans le monomère (méth)acrylique pour former une solution, ou mélange homogène. Ce sont des chaines linéaires, dont la température de transition vitreuse Tg est inférieure à 0°C, et qui ne perturbent donc pas la viscosité du sirop (méth)acrylique.

Du fait que les séquences macromoléculaires sont bien solubles et ne perturbent pas la viscosité du sirop, il est possible d'en incorporer dans le sirop avec un taux élevé, typiquement compris entre 5% en poids et 40% en poids. Une telle teneur en séquences macromoléculaires permet d'obtenir, après polymérisation du sirop, une matrice polymère très résistante aux chocs.

**En ce qui concerne le procédé d'imprégnation du substrat fibreux,** il comprend une étape d'imprégnation du substrat fibreux avec le sirop (méth)acrylique liquide obtenu à la fin de l'étape 2. Cette étape d'imprégnation se fait dans un moule fermé.

Si la viscosité du sirop (méth)acrylique liquide à une température donnée est un peu trop élevée pour le procédé d'imprégnation, il est possible de chauffer le sirop afin d'avoir un sirop plus liquide pour le mouillage suffisant et l'imprégnation correcte et complète du substrat fibreux.

**En ce qui concerne le substrat fibreux,** on peut mentionner les tissus, les feutres ou les non-tissés qui peuvent être sous la forme de bandes, de nappes, de tresses, de mèches ou de pièces. Le matériau fibreux peut avoir différentes formes et dimensions, monodimensionnelles, bidimensionnelles ou tridimensionnelles. Un substrat fibreux comprend un assemblage d'une ou de plusieurs fibres. Lorsque les fibres sont continues, leur assemblage forme des tissus.

La forme monodimensionnelle correspond à des fibres longues linéaires. Les fibres peuvent être discontinues ou continues. Les fibres peuvent être agencées de manière aléatoire ou en parallèle les unes aux autres, sous la forme d'un filament continu. Une fibre est définie par son rapport de longueur, qui est le rapport entre la longueur et le diamètre de la fibre. Les fibres utilisées dans la présente invention sont des fibres longues ou des fibres continues. Les fibres ont un facteur de forme d'au moins 1 000, de préférence d'au moins 1 500, de manière davantage préférée d'au moins 2 000, avantageusement d'au moins 3 000 et le plus avantageusement d'au moins 5 000, encore plus avantageusement d'au moins 6000, toujours plus avantageusement d'au moins 7500 et le plus avantageusement d'au moins 10 000.

La forme bidimensionnelle correspond à des mats fibreux ou des renforts non tissés ou tissés ou des faisceaux de fibres, qui peuvent également être tressés. Même si la forme bidimensionnelle a une certaine épaisseur et par conséquent a en principe une troisième dimension, elle est considérée comme bidimensionnelle selon la présente invention.

La forme tridimensionnelle correspond par exemple à des mats fibreux ou des renforts non tissés ou des faisceaux de fibres ou leurs mélanges, empilés ou pliés, un assemblage de la forme bidimensionnelle dans la troisième dimension.

Les origines du matériau fibreux peuvent être naturelles ou synthétiques. En tant que matériau naturel, on peut mentionner les fibres végétales, les fibres de bois, les fibres animales ou les fibres minérales.

Des fibres naturelles sont par exemple le sisal, le jute, le chanvre, le lin, le coton, les fibres de noix de coco et les fibres de banane. Des fibres animales sont par exemple la laine ou les cheveux.

En tant que matériau synthétique, on peut mentionner des fibres polymères choisies parmi les fibres de polymères thermodurcissables, de polymères thermoplastiques ou leurs mélanges.

Les fibres polymères peuvent être constituées de polyamide (aliphatique ou aromatique), de polyester, d'alcool polyvinylique, de polyoléfines, de polyuréthanes, de polychlorure de vinyle, de polyéthylène, de polyesters insaturés, de résines époxy et d'esters de vinyle.

Les fibres minérales peuvent également être choisies parmi les fibres de verre, notamment de type E, R ou S2, les fibres de carbone, les fibres de bore ou les fibres de silice.

Le substrat fibreux de la présente invention est choisi parmi les fibres végétales, les fibres de bois, les fibres animales, les fibres minérales, les fibres polymères synthétiques, les fibres de verre, les fibres de carbone ou leurs mélanges. De préférence, le substrat fibreux est choisi parmi les fibres minérales.

Les fibres du substrat fibreux ont un diamètre entre 0.005µm et 100µm, de préférence entre 1µm et 50µm, de manière davantage préférée entre 5µm et 30µm et avantageusement entre 10µm et 25µm.

De préférence les fibres du substrat fibreux de la présente invention sont choisies parmi les fibres continues (ce qui signifie que le facteur de forme n'est pas forcement applicable comme pour des fibres longues) pour la forme monodimensionnelle, ou pour des fibres longues ou continues pour la forme bidimensionnelle ou tridimensionnelle du substrat fibreux.

**Selon un aspect supplémentaire, l'invention concerne un matériau composite polymère** comprenant une matrice (méth)acrylique thermoplastique et un substrat fibreux utilisé comme renfort, dans lequel le substrat fibreux est constitué de fibres longues, ledit matériau composite étant caractérisé en ce que la matrice (méth)acrylique thermoplastique est obtenue après polymérisation dudit substrat fibreux pré-imprégné dudit sirop (méth)acryique liquide.

**Un autre aspect de la présente invention est un procédé de fabrication de pièces composites** comprenant les étapes suivantes :
a) l'imprégnation d'un substrat fibreux avec le sirop (méth)acrylique liquide,
b) la polymérisation du sirop (méth)acrylique liquide imprégnant ledit substrat fibreux.

L'imprégnation du substrat fibreux à l'étape a) est de préférence réalisée dans un moule fermé.

Avantageusement, l'étape a) et l'étape b) sont réalisées dans le même moule fermé.

Au moment de la polymérisation du sirop (méth)acrylique, les macromolécules génèrent un copolymère à bloc B(-A)n. Ce copolymère est consituté d'un bloc B formé par les macromolécules, et de n branches A, n étant un nombre entier supérieur à 2, de préférence compris entre 2 et 10, et avantageusement compris entre 2 et 8. Les branches A sont formées par le polymère (meth)acrylique PMMA en formation lors de la polymérisation du sirop. Dans le cadre de l'invention, il peut s'agir d'un copolymère tribloc avec dans ce cas n=2 (un bloc central et 2 branches). A titre d'exemples de copolymère tribloc, il pourra s'agir de:
PMMA-b-polyacrylate de n-butyle-b-PMMA
PMMA-b-poly(acrylate de n-butyle-co-styrène)-b-PMMA
PMMA-b-poly(acrylate d'isobutyle-co-styrène)-b-PMMA
b étant le symbole utilisé pour désigner un copolymère à bloc, et co étant le symbole utilisé pour désigner un copolymère statistique.

A l'issue de la polymérisation, on obtient alors une pièce mécanique ou un élément structurel en matériau composite nanostructuré dont la matrice thermoplastique est renforcée à l'impact et présente une très bonne résistance aux chocs.

En ce qui concerne le procédé de fabrication des pièces composites, différents procédés pourraient être utilisés pour préparer des pièces mécaniques. On peut mentionner l'infusion, le moulage en sac sous vide, le moulage en sac sous pression, le moulage en autoclave, le moulage par transfert de résine (RTM), le moulage par injection-réaction (RIM), le moulage par injection-réaction renforcé (R-RIM) et ses variantes, le moulage sous presse ou le moulage par compression.

Les procédés de fabrication préférés pour la fabrication de pièces composites sont des procédés selon lesquels le sirop (méth)acrylique liquide est transféré au substrat fibreux par imprégnation du substrat fibreux dans un moule, de manière davantage préférée dans un moule fermé.

Avantageusement, l'étape d'imprégnation du matériau fibreux est réalisée dans un moule fermé.

Le plus avantageusement, le procédé de fabrication de pièces composites est choisi parmi le moulage par transfert de résine ou l'infusion.

Tous les procédés comprennent l'étape d'imprégnation du substrat fibreux avec le sirop (méth)acrylique liquide avant l'étape de polymérisation dans un moule.

L'étape de polymérisation du sirop (méth)acrylique liquide imprégnant ledit substrat fibreux a lieu après l'étape d'imprégnation dans le même moule.

Le moulage par transfert de résine est un procédé utilisant un ensemble de moulage à deux côtés qui forme les deux surfaces d'un matériau composite. Le côté inférieur est un moule rigide. Le côté supérieur peut être un moule rigide ou flexible. Des moules flexibles peuvent être fabriqués à partir de matériaux composites, de silicone ou de films polymères extrudés tels que le nylon. Les deux côtés s'emboîtent pour former une cavité de moulage. La caractéristique distinctive du moulage par transfert de résine est que le substrat fibreux est placé dans cette cavité et que l'ensemble de moulage est fermé avant l'introduction du sirop (méth)acrylique liquide. Le moulage par transfert de résine comprend de nombreuses variétés qui diffèrent au niveau de la mécanique d'introduction du sirop (méth)acrylique liquide dans le substrat fibreux dans la cavité de moulage. Ces variations vont de l'infusion sous vide au moulage par transfert de résine sous vide (VARTM). Ce procédé peut être réalisé à température ambiante ou élevée.

Avec le procédé d'infusion, le sirop (méth)acrylique liquide doit avoir la viscosité adaptée pour ce procédé de préparation du matériau composite polymère. Le sirop (méth)acrylique liquide est aspiré dans le substrat fibreux présent dans un moule spécial par application d'un léger vide.

Le substrat fibreux est infusé et complètement imprégné par le sirop (méth)acrylique liquide.

Un avantage de ce procédé est la grande quantité de matériau fibreux dans le composite.

En ce qui concerne l'utilisation des pièces composites ainsi fabriquées, on peut mentionner les applications automobiles, les applications nautiques, les applications ferroviaires, le sport, les applications aéronautiques et aérospatiales, les applications photovoltaïques, les applications informatiques, les applications pour les télécommunications et les applications pour l'énergie éolienne.

La pièce composite est notamment une pièce d'automobile, une pièce de bateau, une pièce de train, un article de sport, une pièce d'avion ou d'hélicoptère, une pièce de vaisseau spatial ou de fusée, une pièce de module photovoltaïque, une pièce d'éolienne, une pièce de meuble, une pièce de construction ou de bâtiment, une pièce de téléphone ou de téléphone portable, une pièce d'ordinateur ou de télévision, une pièce d'imprimante et de photocopieuse.

En ce qui concerne le recyclage de la pièce composite thermoplastique, il peut être réalisé par broyage ou dépolymérisation du polymère thermoplastique.

Le broyage est effectué mécaniquement afin d'obtenir des parties plus petites de la pièce. Puisque la pièce comprend un polymère thermoplastique, ce polymère peut être chauffé, et les pièces de nouveau transformées dans une certaine limite pour obtenir un objet recyclé.

De préférence, la pièce composite thermoplastique est chauffée pour réaliser une pyrolyse ou une décomposition thermique du PMMA et récupérer le méthacrylate de méthyle en tant que monomère.

Avantageusement, au moins 50 % en poids du MMA présent dans le polymère sont récupérés par décomposition thermique.

La pièce est portée à une température d'au moins 200 °C et inférieure ou égale à 400 °C.

Un sujet final de la présente invention concerne ainsi l'utilisation du procédé d'imprégnation ou du procédé de fabrication selon l'invention, notamment lorsque ledit polymère méthacrylique est un homopolymère et/ou un copolymère de méthacrylate de méthyle, pour la fabrication de pièces mécaniques et/ou structurales qui sont recyclables par dépolymérisation thermique (par pyrolyse), au moins 50 % des monomères, notamment du méthacrylate de méthyle (MMA), étant de préférence récupérés.

### [Exemples]

### Exemple 1 :

1^{ère} étape-Préparation de l'additif choc: préparation de séquences macromoléculaires à base d'acrylate de butyle et de styrène.

On introduit dans un réacteur métallique de 2 litres muni d'un agitateur à hélice, d'une double enveloppe de chauffage par circulation d'huile et d'une prise vide / azote :
- 616 g de d'acrylate de butyle
- 84 g de styrène
- 2,4 g de dialcoxyamine DIAMIS (94 % de pureté et 0.35 % SG1 libre) soit 2,3 g de DIAMS pure
- 0.09 g de SG1 à 85 % de pureté (soit 0,077 g de SG1 pur), ce qui représente un excès de 5% molaire par fonction alcoxy portée par le DIAMS en tenant compte des 0,35% de SG1 libre déjà présent dans le DIAMS.

Après introduction des réactifs, le mélange réactionnel est dégazé à trois reprises sous vide / azote. Le réacteur est alors fermé puis l'agitation (50 tr/min) et le chauffage (consigne de température : 125 °C) sont mis en route. La température du mélange réactionnel atteint 113 °C en 30 min environ. La pression s'établit vers 1,5 bar. La température du réacteur est maintenue en palier à 115°C pendant 522 min. On récupère après refroidissement 608 g d'un mélange à 67% d'extrait sec. L'acrylate de butyle en excès est ensuite éliminé par évaporation à 70°C sous pression réduite pendant 3h et remplacé par 700 g de méthacrylate de méthyle MMA. On récupère ainsi 1110 g d'une solution à 37% dans le MMA d'un macro radical « strippé » (débarrassé de son acrylate de butyle en excès). Le rapport en poids acrylate de butyle : styrène du macro radical obtenu est 83 : 17. L'analyse par GPC des séquences macromoléculaires donne les résultats suivants : Mₙ : 120000 g/mol ; M_{w} : 252000 g/mol ; polymolécularité : 2,1.

### Etape 2 : Préparation d'un sirop d'imprégnation

Un sirop est préparé par dissolution de 22% en poids du PMMA (BS520 de la société Altuglas International un copolymère de MMA comprenant de l'acrylate d'éthyle en tant que comonomère) dans 88% en poids de méthacrylate de méthyle, qui est stabilisé avec du MEHQ (éther monoéthylique d'hydroquinone). A ce sirop, est incorporé 8% en poids de séquences macromoléculaires préalablement préparées à l'étape 1. Le sirop a une viscosité dynamique de 325 mPa*s, mesurée à la température ambiante (25 °C) avec un rhéomètre cône/plan de la société Brookfield. Le sirop est injecté dans un moule fermé comprenant un tissu de verre en tant que substrat fibreux.

### Etape 3:Obtention d'une pièce composite

Huit tissus de verre (verre E, armure toile HexForce® 01717 820 TF970 de la société Hexcel, avec un poids nominal de 160 g/m²) mesurant 30 cm x 20 cm ont été pliés au niveau d'une plaque de verre servant de moule pour l'obtention d'une pièce composite de 2 mm d'épaisseur.

Le sirop d'imprégnation préalablement préparé a été infusé à l'aide d'une pompe à vide permettant le transfert du sirop à travers le tissu. La feuille a été imprégnée par infusion pendant 3 minutes, l'infusion avançant à 100 mm/min. La feuille imprégnée par infusion a été placée dans un four pendant 8 heures à 71 °C et une étape de chauffage additionnelle de 30 minutes à 125 °C a eu lieu pour terminer la polymérisation du PMMA (en atteignant un taux de conversion de presque 100 % du monomère).

Le composite polymère a été récupéré par séparation des différents films de l'infusion après polymérisation complète et démoulage.

Une pièce composite en forme de plaque est obtenue à partir du moule.

La plaque présente une bonne adhérence du polymère thermoplastique au substrat fibreux.

Après l'utilisation, la pièce composite en forme de feuille peut être recyclée par chauffage et dépolymérisation.

### Exemple 2 (hors invention)

### 1ere étape : Préparation d'un sirop d'imprégnation

Un sirop a été préparé par dissolution de 25 % en poids de polyméthacrylate de méthyle (PMMA V825 de la société Altuglas) dans du méthacrylate de méthyle (MMA) en présence de 325 ppm d'AIBN (azobisisobutyronitrile) et de 35 ppm de terpinolène (1,4-paramenthadiène). La dissolution a eu lieu à la température ambiante à 25 °C pendant 48 heures. La viscosité de la solution de sirop était de 513 mPa*s, mesurée à la température ambiante (25 °C) avec un rhéomètre cône/plan de la société Brookfield.

### 2^{ème} étape : Obtention d'une pièce composite

Huit tissus de verre (verre E, armure toile HexForce® 01717 820 TF970 de la société Hexcel, avec un poids nominal de 160 g/m²) mesurant 30 cm x 20 cm ont été pliés au niveau d'une plaque de verre servant de moule pour l'obtention d'une pièce composite de 2 mm d'épaisseur.

Le sirop de prépolymère formé a été infusé à l'aide d'une pompe à vide permettant le transfert du sirop à travers le tissu. La feuille a été imprégnée par infusion pendant 3 minutes, l'infusion avançant à 100 mm/min. La feuille imprégnée par infusion a été placée dans un four pendant 4 heures à 60 °C et une étape de chauffage additionnelle de 30 minutes à 125 °C a eu lieu pour terminer la polymérisation du PMMA (en atteignant un taux de conversion de presque 100 % du monomère).

Le composite polymère a été récupéré par séparation des différent films de l'infusion après polymérisation complète et démoulage.

### Essais comparatifs : Caractérisation à l'impact des plaques composites préparées dans les exemples 1 et 2: Test de Flexion rapide

La structure multicouche, supportée comme une poutre, est soumise à une flexion, au milieu de la portée, à une vitesse constante. Durant cet essai, la charge appliquée à l'éprouvette est mesurée.

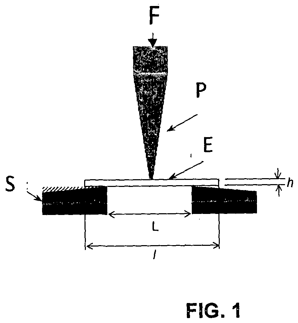

La Figure 1 représente un schéma des tests en flexion réalisés.Les essais de flexion sont réalisés à vitesse constante sur l'appareillage servo-hydraulique MTS-831. La force F est mesurée au moyen d'une cellule piezo-électrique noyée dans le nez du percuteur P de gamme 569,4N. Le déplacement de l'éprouvette E pendant la sollicitation est mesurée par un capteur L.V.D.T sur le vérin hydraulique de gamme 50 mm.

### Préparation des éprouvettes

Des barreaux correspondants aux dimensions ci-dessous sont prélevés à l'aide d'une fraiseuse numérique de marque Charlyrobot CRA à partir des plaques compressées simulant les structures multicouches.

Le choix de la plaque de prélèvement se fait visuellement suivant l'état de surface de la couche mince. 6 barreaux par plaque sont découpés.

Les dimensions d'éprouvette E, en millimètres, sont:
- longueur: *l* = 80 +/- 0,2
- largeur: b = 10.0 +/- 0,2
- épaisseur: *h* = mesurée pour chaque barreau
Position à plat selon la définition de la norme ISO 179

### Conditions du test

La portée L, distance entre les appuis sur le support S, est réglée à L = 62 mm.

La vitesse de sollicitation appliquée est 1 m/s.

Durant l'essai, la force F (exprimée en N) et le déplacement (mm) du percuteur sont enregistrés.

A partir des courbes expérimentales, on calcule l'aire sous la courbe Force fonction du déplacement jusqu'à rupture du spécimen. Cette aire exprimée en Joule est représentative de l'énergie fournie au système lors du chargement.

La résistance à la flexion, notée Re, est l'énergie de rupture relative à la section droite centrale du barreau exprimée en kJ/m².
Exemple 1 selon l'invention Re=30,7 +/- 4,6 kJ/m²
Exemple 2 hors invention Re=18,9 +/- 7,1 kJ/m²

## Revendications

1. Sirop (meth)acrylique liquide d'imprégnation d'un substrat fibreux, ledit substrat fibreux étant constitué de fibres longues, ledit sirop étant **caractérisé en ce qu'**il comprend :
a)un polymère (méth)acrylique,
b)un monomère (méth)acrylique,
c)des domaines élastomères constitués par des séquences macromoléculaires à caractère souple, de température de transition vitreuse inférieure à 0°C telle que déterminée par DSC, les séquences macromoléculaires ne sont pas préparées à partir d'un diène,
et qui sont solubles dans le monomère (méth)acrylique, ledit sirop (méth)acrylique liquide ayant une viscosité dynamique à 25°C comprise entre 10 mPa*s et 10 000 mPa*s, de préférence entre 50 mPa*s et 5 000 mPa*s et avantageusement entre 100 mPa*s et 1 000 mPa*s.

2. Sirop (meth)acrylique liquide d'imprégnation selon la revendication 1, **caractérisé en ce que** la teneur en séquences macromoléculaires dans le sirop est comprise entre 1 et 40% en poids, de préférence entre 3 et 25 % en poids et avantageusement entre 5 et 15 % en poids.

3. Sirop (meth)acrylique liquide d'imprégnation selon la revendication 1 ou 2, **caractérisé en ce que** les séquences macromoléculaires sont préparées à partir de monomères choisis parmi :
• les monomères acryliques de formule CH₂=CH-C(=O)-O-R₁ où R₁ désigne un atome d'hydrogène, un groupement alkyle en C₁-C₄₀ linéaire, cyclique ou ramifié éventuellement substitué par un atome d'halogène, un groupement hydroxy, alcoxy, cyano, amino ou époxy tels que par exemple l'acide acrylique, l'acrylate de méthyle, d'éthyle, de propyle, de n-butyle, d'isobutyle, de tertiobutyle, de 2-éthylhexyle, de glycidyle, les acrylates d'hydroxyalkyle, l'acrylonitrile,
• les monomères méthacryliques de formule CH₂=C(CH₃)-C(=O)-O-R₂ où R₂ désigne un atome d'hydrogène, un groupement alkyle en C₁-C₄₀ linéaire, cyclique ou ramifié éventuellement substitué par un atome d'halogène, un groupement hydroxy, alcoxy, cyano, amino ou époxy tels que par exemple l'acide méthacrylique, le méthacrylate de méthyle, d'éthyle, de propyle, de n-butyle, d'isobutyle, de tertiobutyle, de 2-éthylhexyle, de glycidyle, les méthacrylates d'hydroxyalkyle, le méthacrylonitrile,
• les monomères vinylaromatiques tels que par exemple le styrène, les styrènes substitués, l'alpha-méthylstyrène, le monochlorostyrène, le tertbutyl styrène.

4. Sirop (meth)acrylique liquide d'imprégnation selon l'une des revendications 1 à 3, **caractérisé en ce que** les séquences macromoléculaires à caractère souple comprennent d'acrylate de butyle à au moins 70%massique.

5. Sirop (meth)acrylique liquide d'imprégnation selon l'une des revendications 1 à 4, **caractérisé en ce que** les séquences macromoléculaires sont préparées à partir d'acrylate de butyle et de styrène dans le rapport massique acrylate de butyle / styrène compris entre 70/30 et 90/10.

6. Sirop (meth)acrylique liquide d'imprégnation selon l'une des revendications 1 à 5, **caractérisée en ce que** les séquences macromoléculaires faisant partie d'un copolymère à blocs.

7. Sirop (meth)acrylique liquide d'imprégnation selon la revendications 6, **caractérisée en ce que** les séquences les copolymères à blocs sont obtenus par polymérisation radicalaire contrôlée (PRC) ou par polymérisation anionique.

8. Sirop (meth)acrylique liquide d'imprégnation selon l'une des revendications 1 à 5, **caractérisée en ce que** les séquences macromoléculaires sont préparées en mélangeant au(x) monomère(s) destiné(s) à former les séquences macromoléculaires, une alcoxyamine de formule générale Z(-T)ₙ dans laquelle Z désigne un groupement multivalent, T un nitroxyde et n est un entier supérieur ou égal à 2.

9. Sirop (meth)acrylique liquide d'imprégnation selon la revendication 8, **caractérisée en ce que** l'alcoxyamine répond à la formule suivante : 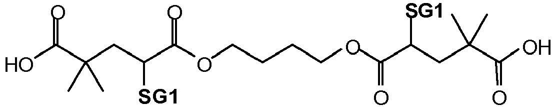 SG1 étant le N-tertiobutyl-1-diéthylphosphono-2,2-diméthylpropyl nitroxyde.

10. Sirop (meth)acrylique liquide d'imprégnation selon la revendication 8, **caractérisée en ce que** l'alcoxyamine répond à la formule suivante : 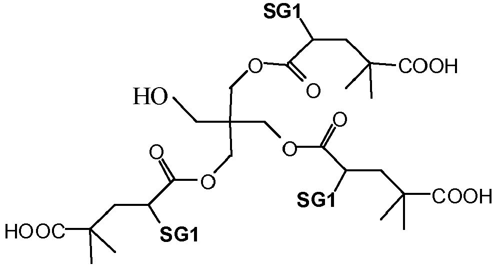 SG1 étant le N-tertiobutyl-1-diéthylphosphono-2,2-diméthylpropyl nitroxyde.

11. Sirop (meth)acrylique liquide d'imprégnation selon la revendication 1, **caractérisé en ce que** le polymère (méth)acrylique est un homo- ou copolymère de méthacrylate de méthyle (MMA) ou un de leurs mélanges.

12. Sirop (meth)acrylique liquide selon la revendication 1, **caractérisé en ce que** le monomère (méth)acrylique est choisi parmi l'acide acrylique, l'acide méthacrylique, les monomères acryliques d'alkyle, les monomères méthacryliques d'alkyle et leurs mélanges, le groupe alkyle contenant de 1 à 22 carbones, linéaires, ramifiés ou cycliques ; le groupe alkyle contenant de préférence 1 à 12 carbones, linéaires, ramifiés ou cycliques.

13. Sirop (meth)acrylique liquide d'imprégnation selon l'une quelconque des revendications précédentes, **caractérisée en ce que** ledit sirop comprend :
a) de 10 % en poids à 30% en poids d'un polymère (méth)acrylique,
b) de 30 % en poids à 89% en poids d'un monomère (méth)acrylique,
c) de 1 % en poids à 40 % en poids de séquences macromoléculaires.

14. Procédé de fabrication d'un sirop (meth)acrylique liquide d'imprégnation selon l'une des revendications 1 à 13, **caractérisé en ce qu'**il comprend les étapes suivantes :
1. préparer les séquences macromoléculaires en mélangeant au(x) monomère(s) destiné(s) à former les séquences macromoléculaires une alcoxyamine de formule générale Z(-T)ₙ dans laquelle Z désigne un groupement multivalent, T un nitroxyde et n est un entier supérieur ou égal à 2
2.mélanger les séquences macromoléculaires obtenues à l'étape 1 à un polymère (méth)acrylique et un monomère (méth)acrylique.

15. Procédé d'imprégnation pour l'imprégnation d'un substrat fibreux, ledit substrat fibreux étant constitué de fibres longues et ledit procédé comprenant une étape d'imprégnation dudit substrat fibreux avec ledit sirop (méth)acrylique selon l'une des revendications 1 à 13.

16. Procédé d'imprégnation selon la revendication 15, **caractérisé en ce que** l'étape d'imprégnation dudit substrat fibreux est réalisée dans un moule fermé.

17. Matériau composite polymère comprenant une matrice (méth)acrylique thermoplastique et un substrat fibreux utilisé comme renfort, dans lequel le substrat fibreux est constitué de fibres longues, ledit matériau composite étant **caractérisé en ce que** la matrice (méth)acrylique thermoplastique est obtenue après polymérisation dudit substrat fibreux pré-imprégné dudit sirop (méth)acryique liquide selon l'une quelconque des revendications 1 à 13.

18. Procédé de fabrication de pièces composites, comprenant les étapes suivantes :
a)imprégnation d'un substrat fibreux avec un sirop (méth)acrylique liquide selon l'une quelconque des revendications 1 à 13,
b)polymérisation dudit sirop (méth)acrylique liquide imprégnant ledit substrat fibreux.

19. Procédé selon la revendication 18, **caractérisé en ce que** l'imprégnation du substrat fibreux à l'étape a) est réalisée dans un moule fermé.

20. Procédé selon l'une quelconque des revendications 18 à 19, **caractérisé en ce que** le procédé est choisi parmi le moulage par transfert de résine ou l'infusion.

21. Pièce mécanique ou élément structurel en matériau composite selon la revendication 17, ou obtenue par le procédé de fabrication selon les revendications 18 à 20.

22. Pièce selon la revendication 21, ladite pièce étant une pièce d'automobile, une pièce de bateau, une pièce de train, un article de sport, une pièce d'avion ou d'hélicoptère, une pièce de vaisseau spatial ou de fusée, une pièce de module photovoltaïque, une pièce d'éolienne, une pièce de meuble, une pièce de construction ou de bâtiment, une pièce de téléphone ou de téléphone portable, une pièce d'ordinateur ou de télévision, une pièce d'imprimante et de photocopieuse.

## Patentansprüche

1. Flüssiger (Meth)Acrylsirup zum Imprägnieren eines Fasersubstrats, wobei das Fasersubstrat aus langen Fasern besteht, wobei der Sirup **dadurch gekennzeichnet ist, dass** dieser umfasst:
a) ein (Meth)Acrylpolymer,
b) ein (Meth)Acrylmonomer,
c) Elastomerdomänen, die aus makromolekularen Sequenzen mit flexiblem Charakter mit einer Glasübergangstemperatur kleiner als 0°, wie durch DSC bestimmt, bestehen, wobei die makromolekularen Sequenzen nicht aus einem Dien hergestellt sind, und die in dem (Meth)Acrylmonomer löslich sind,
wobei der flüssige (Meth)Acrylsirup eine dynamische Viskosität bei 25°C zwischen 10 mPa*s und 10 000 mPa*s aufweist, vorzugsweise zwischen 50 mPa*s und 5 000 mPa*s und vorteilhaft zwischen 100 mPa*s und 1 000 mPa*s.

2. Flüssiger (Meth)Acrylsirup zum Imprägnieren nach Anspruch 1, **dadurch gekennzeichnet, dass** der Gehalt an makromolekularen Sequenzen in dem Sirup zwischen 1 und 40 Gew.-% beträgt, vorzugsweise zwischen 3 und 25 Gew.-% und vorteilhaft zwischen 5 und 15 Gew.-%.

3. Flüssiger (Meth)Acrylsirup zum Imprägnieren nach Anspruch 1 oder 2, **dadurch gekennzeichnet, dass** die makromolekularen Sequenzen aus Monomeren hergestellt sind, ausgewählt aus:
• Acrylmonomeren mit der Formel CH₂=CH-C(=O)-O-R₁, wobei R₁ darstellt: ein Wasserstoffatom, eine lineare, cyclische oder verzweigte C₁-C₄₀-Alkylgruppe, gegebenenfalls substituiert durch ein Halogenatom, eine Hydroxy-, Alkoxy-, Cyano-, Amino- oder Epoxygruppe, wie beispielsweise Acrylsäure, Methyl-, Ethyl-, Propyl-, n-Butyl-, Isobutyl-, tert.Butyl-, 2-Ethylhexyl-, Glycidylacrylat, Hydroxyalkylacrylaten, Acrylonitril,
• Methacrylmonomeren mit der Formel CH₂=C(CH₃)-C(=O)-O-R₂, wobei R₂ darstellt: ein Wasserstoffatom, eine lineare, cyclische oder verzweigte C₁-C₄₀-Alkylgruppe, gegebenenfalls substituiert durch ein Halogenatom, eine Hydroxy-, Alkoxy-, Cyano-, Amino- oder Epoxygruppe, wie beispielsweise Methacrylsäure, Methyl-, Ethyl-, Propyl-, n-Butyl-, Isobutyl-, tert.-Butyl-, 2-Ethylhexyl-, Glycidylmethacrylat, Hydroxyalkylmethacrylaten, Methacrylonitril,
• vinylaromatischen Monomeren, wie beispielsweise Styrol, substituierten Styrolen, alpha-Methylstyrol, Monochlorstyrol, tert.-Butylstyrol.

4. Flüssiger (Meth)Acrylsirup zum Imprägnieren nach einem der Ansprüche 1 bis 3, **dadurch gekennzeichnet, dass** die makromolekularen Sequenzen mit flexiblem Charakter Butylacrylat mit mindestens 70 Masse-% umfassen.

5. Flüssiger (Meth)Acrylsirup zum Imprägnieren nach einem der Ansprüche 1 bis 4, **dadurch gekennzeichnet, dass** die makromolekularen Sequenzen aus Butyl- und Styrolacrylat in einem Massenverhältnis Butyl/Styrol zwischen 70/30 und 90/10 hergestellt sind.

6. Flüssiger (Meth)Acrylsirup zum Imprägnieren nach einem der Ansprüche 1 bis 5, **dadurch gekennzeichnet, dass** die makromolekularen Sequenzen einen Teil eines Blockcopolymers bilden.

7. Flüssiger (Meth)Acrylsirup zum Imprägnieren nach Anspruch 6, **dadurch gekennzeichnet, dass** die Sequenzen der Blockcopolymere durch gesteuerte radikalische Polymerisation (PRC) oder durch anionische Polymerisation erhalten werden.

8. Flüssiger (Meth)Acrylsirup zum Imprägnieren nach einem der Ansprüche 1 bis 5, **dadurch gekennzeichnet, dass** die makromolekularen Sequenzen durch Mischen, mit dem (den) Monomer(en), das oder die dazu bestimmt ist oder sind, die makromolekularen Sequenzen zu bilden, eines Alkoxyamins mit der allgemeinen Formel Z(-T)ₙ hergestellt sind, wobei Z eine mehrwertige Gruppe darstellt, T ein Nitroxid, und n eine ganze Zahl größer oder gleich 2 ist.

9. Flüssiger (Meth)Acrylsirup zum Imprägnieren nach Anspruch 8, **dadurch gekennzeichnet, dass** das Alkoxyamin die folgende Formel aufweist: 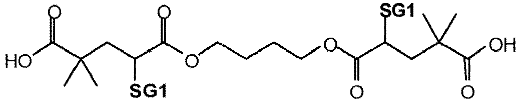 wobei SG1 N-tert.-Butyl-1-diethylphospon-2,2-dimethylpropylnitroxid ist.

10. Flüssiger (Meth)Acrylsirup zum Imprägnieren nach Anspruch 8, **dadurch gekennzeichnet, dass** das Alkoxyamin die folgende Formel aufweist: 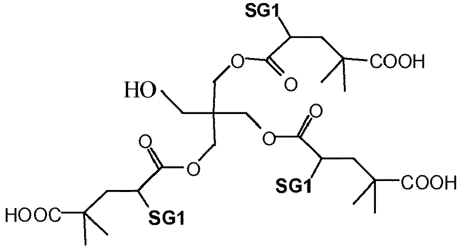 wobei SG1 N-tert.-Butyl-1-diethylphospon-2,2-dimethylpropylnitroxid ist.

11. Flüssiger (Meth)Acrylsirup zum Imprägnieren nach Anspruch 1, **dadurch gekennzeichnet, dass** das (Meth)Acrylpolymer ein Homo- oder Copolymer von Methylmethacrylat (MMA) oder eine ihrer Mischungen ist.

12. Flüssiger (Meth)Acrylsirup zum Imprägnieren nach Anspruch 1, **dadurch gekennzeichnet, dass** das (Meth)Acrylmonomer ausgewählt ist aus Acrylsäure, Methacrylsäure, Alkylacrylmonomeren, Alkylmethacrylmonomeren und ihren Mischungen, wobei die Alkylgruppe 1 bis 22 lineare, verzweigte oder cyclische Kohlenstoffatome enthält; wobei die Alkylgruppe vorzugsweise 1 bis 12 lineare, verzweigte oder cyclische Kohlenstoffatome enthält.

13. Flüssiger (Meth)Acrylsirup zum Imprägnieren nach einem der vorhergehenden Ansprüche, **dadurch gekennzeichnet, dass** der Sirup umfasst:
a) von 10 Gew.-% bis 30 Gew.-% eines (Meth)Acrylpolymers,
b) von 30 Gew.-% bis 89 Gew.-% eines (Meth)Acrylmonomers,
c) von 1 Gew.-% bis 40 Gew.-% makromolekulare Sequenzen.

14. Verfahren zur Herstellung eines flüssigen (Meth)Acrylsirups zum Imprägnieren nach einem der Ansprüche 1 bis 13, **dadurch gekennzeichnet, dass** dieses die folgenden Schritte umfasst:
1. Herstellen der makromolekularen Sequenzen durch Mischen, mit dem (den) Monomer (en), das oder die dazu bestimmt ist oder sind, die makromolekularen Sequenzen zu bilden, eines Alkoxyamins mit der allgemeinen Formel Z(-T)ₙ, wobei Z eine mehrwertige Gruppe darstellt, T ein Nitroxid, und n eine ganze Zahl größer oder gleich 2 ist,
2. Mischen der in Schritt 1 erhaltenen makromolekularen Sequenzen mit einem (Meth)Acrylpolymer und einem (Meth)Acrylmonomer.

15. Verfahren zum Imprägnieren eines Fasersubstrats, wobei das Fasersubstrat aus langen Fasern besteht, und das Verfahren einen Schritt des Imprägnierens des Fasersubstrats mit dem (Meth)Acrylsirup nach einem der Ansprüche 1 bis 13 umfasst.

16. Verfahren zum Imprägnieren nach Anspruch 15, **dadurch gekennzeichnet, dass** der Schritt des Imprägnierens des Fasersubstrats in einer geschlossenen Form durchgeführt wird.

17. Polymer-Verbundwerkstoff, umfassend eine thermoplastische (Meth)Acrylmatrix und ein Fasersubstrat, das als Verstärkung verwendet wird, wobei das Fasersubstrat aus langen Fasern besteht, wobei der Verbundwerkstoff **dadurch gekennzeichnet ist, dass** die thermoplastische (Meth)Acrylmatrix nach der Polymerisation des Fasersubstrats erhalten wird, das mit dem flüssigen (Meth)Acrylsirup nach einem der Ansprüche 1 bis 13 vorimprägniert ist.

18. Verfahren zur Herstellung von Verbundwerkstoffteilen, umfassend die folgenden Schritte:
a) Imprägnieren eines Fasersubstrats mit einem flüssigen (Meth)Acrylsirup nach einem der Ansprüche 1 bis 13,
b) Polymerisieren des flüssigen (Meth)Acrylsirups, mit dem das Fasersubstrat imprägniert ist.

19. Verfahren nach Anspruch 18, **dadurch gekennzeichnet, dass** das Imprägnieren des Fasersubstrats in Schritt a) in einer geschlossenen Form durchgeführt wird.

20. Verfahren nach einem der Ansprüche 18 bis 19, **dadurch gekennzeichnet, dass** das Verfahren aus Harzspritzpressen oder Infusion ausgewählt wird.

21. Mechanischer Teil oder Strukturelement mit einer Verbundwerkstoffmatrix nach Anspruch 17, oder erhalten durch das Herstellungsverfahren nach einem der Ansprüche 18 bis 20.

22. Teil nach Anspruch 21, wobei der Teil ein Fahrzeugteil, ein Schiffteil, ein Eisenbahnteil, ein Sportartikel, ein Flugzeug- oder ein Helikopterteil, ein Raumschiff- oder ein Raketenteil, ein Fotovoltaikmodulteil, ein Windturbinenteil, ein Möbelteil, ein Konstruktions- oder ein Gebäudeteil, ein Telefon- oder ein Mobiltelefonteil, ein Rechner- oder ein Fernsehgeräteteil, ein Drucker- oder ein Fotokopiererteil ist.

## Claims

1. Liquid (meth)acrylic syrup for impregnating a fibrous substrate, said fibrous substrate consisting of long fibres, said syrup being **characterized in that** it comprises:
a) a (meth)acrylic polymer,
b) a (meth)acrylic monomer,
c) elastomeric domains consisting of macromolecular blocks of flexible nature, with a glass transition temperature of less than 0°C as determined by DSC, the macromolecular blocks not being prepared from a diene, and which are soluble in the (meth)acrylic monomer,
said liquid (meth)acrylic syrup having a dynamic viscosity at 25°C of between 10 mPa.s and 10 000 mPa.s, preferably between 50 mPa.s and 5000 mPa.s and advantageously between 100 mPa.s and 1000 mPa.s.

2. Liquid (meth)acrylic impregnation syrup according to Claim 1, **characterized in that** the content of macromolecular blocks in the syrup is between 1% and 40% by weight, preferably between 3% and 25% by weight and advantageously between 5% and 15% by weight.

3. Liquid (meth)acrylic impregnation syrup according to Claim 1 or 2, **characterized in that** the macromolecular blocks are prepared from monomers chosen from:
• the acrylic monomers of formula CH₂=CH-C(=O)-O-R₁ in which R₁ denotes a hydrogen atom or a linear, cyclic or branched C₁-C₄₀ alkyl group optionally substituted with a halogen atom or a hydroxyl, alkoxy, cyano, amino or epoxy group, such as, for example, acrylic acid, methyl, ethyl, propyl, n-butyl, isobutyl, tert-butyl, 2-ethylhexyl or glycidyl acrylate, hydroxyalkyl acrylates or acrylonitrile,
• the methacrylic monomers of formula CH₂=C(CH₃)-C(=O)-O-R₂ in which R₂ denotes a hydrogen atom or a linear, cyclic or branched C₁-C₄₀ alkyl group optionally substituted with a halogen atom or a hydroxyl, alkoxy, cyano, amino or epoxy group, such as, for example, methacrylic acid, methyl, ethyl, propyl, n-butyl, isobutyl, tert-butyl, 2-ethylhexyl or glycidyl methacrylate, hydroxyalkyl methacrylates or methacrylonitrile,
• vinylaromatic monomers, such as, for example, styrene, substituted styrenes, alphamethylstyrene, monochlorostyrene or tert-butylstyrene.

4. Liquid (meth)acrylic impregnation syrup according to one of Claims 1 to 3, **characterized in that** the macromolecular blocks of flexible nature comprise butyl acrylate at at least 70% by weight.

5. Liquid (meth)acrylic impregnation syrup according to one of Claims 1 to 4, **characterized in that** the macromolecular blocks are prepared from butyl acrylate and styrene in the butyl acrylate/styrene weight ratio of between 70/30 and 90/10.

6. Liquid (meth)acrylic impregnation syrup according to one of Claims 1 to 5, **characterized in that** the macromolecular blocks are part of a block copolymer.

7. Liquid (meth)acrylic impregnation syrup according to Claim 6, **characterized in that** the blocks of the block copolymers are obtained by controlled radical polymerization (CRP) or by anionic polymerization.

8. Liquid (meth)acrylic impregnation syrup according to one of Claims 1 to 5, **characterized in that** the macromolecular blocks are prepared by mixing, with the monomer(s) intended to form the macromolecular blocks, an alkoxyamine of general formula Z(-T)ₙ in which Z denotes a multivalent group, T denotes a nitroxide and n is an integer greater than or equal to 2.

9. Liquid (meth)acrylic impregnation syrup according to Claim 8, **characterized in that** the alkoxyamine corresponds to the following formula: 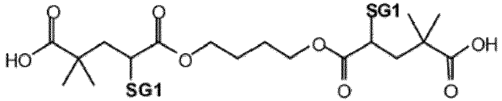 SG1 being N-tert-butyl-1-diethylphosphono-2,2-dimethylpropyl nitroxide.

10. Liquid (meth)acrylic impregnation syrup according to Claim 8, **characterized in that** the alkoxyamine corresponds to the following formula: 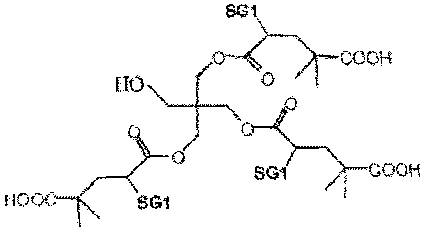 SG1 being N-tert-butyl-1-diethylphosphono-2,2-dimethylpropyl nitroxide.

11. Liquid (meth)acrylic impregnation syrup according to Claim 1, **characterized in that** the (meth)acrylic polymer is a homo- or copolymer of methyl methacrylate (MMA) or a blend thereof.

12. Liquid (meth)acrylic syrup according to Claim 1, **characterized in that** the (meth)acrylic monomer is chosen from acrylic acid, methacrylic acid, alkyl acrylic monomers, alkyl methacrylic monomers and mixtures thereof, the alkyl group containing from 1 to 22 linear, branched or cyclic carbons, the alkyl group preferably containing from 1 to 12 linear, branched or cyclic carbons.

13. Liquid (meth)acrylic impregnation syrup according to any one of the preceding claims, **characterized in that** said syrup comprises:
a) from 10% by weight to 30% by weight of a (meth)acrylic polymer,
b) from 30% by weight to 89% by weight of a (meth)acrylic monomer,
c) from 1% by weight to 40% by weight of macromolecular blocks.

14. Process for producing a liquid (meth)acrylic impregnation syrup according to one of Claims 1 to 13, **characterized in that** it comprises the following steps:
1. preparing the macromolecular blocks by mixing, with the monomer(s) intended to form the macromolecular blocks, an alkoxyamine of general formula Z(-T)ₙ in which Z denotes a multivalent group, T denotes a nitroxide and n is an integer greater than or equal to 2,
2. mixing the macromolecular blocks obtained in step 1 with a (meth)acrylic polymer and a (meth)acrylic monomer.

15. Impregnation process for impregnating a fibrous substrate, said fibrous substrate consisting of long fibres and said process comprising a step of impregnating said fibrous substrate with said (meth)acrylic syrup according to one of Claims 1 to 13.

16. Impregnation process according to Claim 15, **characterized in that** the step of impregnating said fibrous substrate is carried out in a closed mould.

17. Polymer composite material comprising a thermoplastic (meth)acrylic matrix and a fibrous substrate used as reinforcement, in which the fibrous substrate consists of long fibres, said composite material being **characterized in that** the thermoplastic (meth)acrylic matrix is obtained after polymerization of said fibrous substrate preimpregnated with said liquid (meth)acrylic syrup according to any one of Claims 1 to 13.

18. Process for producing composite parts, comprising the following steps:
a) impregnating a fibrous substrate with a liquid (meth)acrylic syrup according to any one of Claims 1 to 13,
b) polymerizing said liquid (meth)acrylic syrup impregnating said fibrous substrate.

19. Process according to Claim 18, **characterized in that** the impregnation of the fibrous substrate in step a) is carried out in a closed mould.

20. Process according to either one of Claims 18 and 19, **characterized in that** the process is chosen from resin transfer moulding or infusion.

21. Mechanical part or structural element made of composite material according to Claim 17, or obtained by means of the production process according to Claims 18 to 20.

22. Part according to Claim 21, said part being a motor vehicle part, a boat part, a train part, a sport article, an aeroplane or helicopter part, a spaceship or rocket part, a photovoltaic module part, a wind turbine part, a furniture part, a construction or building part, a telephone or mobile phone part, a computer or television part, a printer and photocopier part.
